# FASCICULE DE BREVET EUROPEEN

(11) **EP 4 519 052 B1**
(45) Date de publication et mention de la délivrance du brevet: **22.04.2026**
(21) Numéro de dépôt: 23723897.7
(22) Date de dépôt: 01.05.2023
(51) Int. Cl.: B25J 15/04

(54) **PROCEDE DE FIXATION D'UN OUTIL SUR UN BRAS DE ROBOT ET ASSEMBLAGE ASSOCIE**
VERFAHREN ZUR BEFESTIGUNG EINES WERKZEUGS AN EINEM ROBOTERARM UND ZUGEHÖRIGE ANORDNUNG
METHOD FOR ATTACHING A TOOL TO A ROBOT ARM, AND ASSOCIATED ASSEMBLY

(30) Priorité: 02.05.2022 FR 2204168
(43) Date de publication de la demande: 12.03.2025
(73) Titulaire: Institut de Recherche Technologique Jules Verne, 44340 Bouguenais (FR)
(72) Inventeur: VAVRA, Viktor, 44800 Saint-Herblain (FR); MELENDEZ GOALARD, Leonardo, 44000 NANTES (FR)
(74) Mandataire: Alatis
(86) Numéro de dépôt international: PCT/EP2023/061434
(87) Numéro de publication internationale: WO 2023/213753

(56) Documents cités:
- WO-A1-2011/019742
- CN-A- 111 618 897
- JP-A- H0 435 886
- KR-B1- 101 769 138

## Description

### DOMAINE TECHNIQUE DE L'INVENTION

L'invention concerne, de façon générale, le domaine technique de la fixation d'un outil sur un bras de robot.

L'invention se rapporte plus spécifiquement à un procédé de fixation d'un outil sur un bras de robot et à un assemblage.

### ÉTAT DE LA TECHNIQUE ANTÉRIEURE

Dans le domaine de la robotique, il est commun d'avoir besoin de plusieurs outils différents pour réaliser une suite de tâches. Cependant, il est souvent obligatoire de limiter le nombre d'outils à l'extrémité du bras du robot afin de diminuer la masse embarquée, l'encombrement ou le risque de collision par exemple. Cette limite peut amener à utiliser un outil unique porté par le bras de robot, et l'utilisation d'un changeur d'outils s'impose.

De façon connue, la plupart des changeurs d'outil industriels sont soit automatiques, soit manuels.

Dans le premier cas, il est généralement nécessaire d'utiliser une source d'énergie, très souvent pneumatique, et d'implanter un actionneur au niveau de changeur d'outil afin de garantir la prise sûre de l'outil. Ces contraintes imposent un accroissement du poids, de la complexité de pilotage, du câblage, etc.

Dans le cas d'un changeur manuel il devient nécessaire de faire appel à un opérateur qualifié, souvent équipé d'un outil spécifique afin de verrouiller et déverrouiller l'outil sur le changeur d'outil. Cela diminue le niveau d'automatisation et implique l'utilisation d'une main-d'œuvre pour des tâches supplémentaires à faible valeur ajoutée.

Les documents CN 111 618 897 A et WO 2011/019742 A1 décrivent un procédé de fixation d'un outil sur un bras de robot, connu de l'art antérieur.

### EXPOSE DE L'INVENTION

L'invention vise à remédier à tout ou partie des inconvénients de l'état de la technique en proposant notamment une solution permettant à un robot de changer son outil de façon rapide de sorte à conférer un gain de temps dans la chaîne de production, de façon automatique de sorte à gagner en autonomie, et de façon passive, de sorte à ne pas dépendre de câblages ou d'énergies supplémentaires.

Pour ce faire est proposé, selon un premier aspect de l'invention, un procédé de fixation d'un outil sur un bras de robot, comportant au moins les étapes suivantes :
- un passage d'une position relative d'approche à une position relative d'encastrement par mouvement relatif de translation entre l'outil et le bras de robot parallèlement à un axe de référence du bras de robot de manière à ce que l'axe de référence du bras de robot soit coaxial avec un axe de référence de l'outil, et de manière à faire pénétrer des tenons dans des encoches associées, chacune des encoches étant associés à un sous-ensemble parmi l'outil et le bras de robot et à un des tenons solidaire de l'autre sous-ensemble parmi l'outil et le bras de robot, puis
- un passage de la position relative d'encastrement à une position relative d'assemblage par mouvement relatif de rotation entre l'outil et le bras de robot autour de l'axe de rotation de façon à ce que chacun des tenons vienne se loger dans un prolongement circonférentiel de l'encoche associée et s'y trouve retenu axialement, puis
- un verrouillage en position relative d'assemblage par mouvement relatif de translation parallèlement à l'axe de référence du bras de robot, entre l'ensemble formé par l'outil et le bras de robot dans la position relative d'assemblage et au moins une pièce de verrouillage de façon à ce que des cales solidaires de la pièce de verrouillage pénètrent dans les encoches et verrouillent en position les tenons en position de verrouillage.

Grâce à une telle combinaison de caractéristiques, la fixation du bras de l'outil sur le bras de robot est effectuée mécaniquement de façon très simple. Cette continuité des mouvements de translation et de rotation successifs est en effet simple à mettre en œuvre et rapide.

Selon un mode de réalisation, durant le passage de la position relative d'encastrement à la position relative d'assemblage, chacun des tenons vient se loger de façon ajustée dans un prolongement circonférentiel de l'encoche associée. Une telle caractéristique permet un ajustement serré des pièces assemblées, notamment de l'outil par rapport au bras de robot.

Selon un mode de réalisation, le passage de la position relative d'approche à la position relative d'encastrement se fait par mouvement motorisé du bras de robot, l'outil étant retenu dans un support. Un simple mouvement commandé du bras de robot par le robot permet ainsi de mettre en œuvre ce mouvement simple.

Selon un mode de réalisation, le passage de la position relative d'encastrement à la position relative d'assemblage se fait par mouvement motorisé du bras de robot, l'outil étant retenu dans le support.

Selon un mode de réalisation, le verrouillage en position relative d'assemblage se fait par mouvement motorisé du bras de robot, la pièce de verrouillage étant retenue dans le support.

Ces mouvements successifs peuvent ainsi être mis en œuvre par le robot lui-même tandis que l'outil est retenu sur un support, positionné dans une zone d'action du robot. Plusieurs outils, chacun retenu dans un support dédié permet ainsi à un même robot de pouvoir y fixer l'outil nécessaire, voire de changer d'outil lorsque c'est nécessaire.

Selon un mode de réalisation, le procédé de fixation comporte une opération de libération de l'ensemble verrouillé constitué par le bras de robot et l'outil en position d'assemblage, et la pièce de verrouillage en position de verrouillage par translation du bras de robot par rapport au support dans une direction perpendiculaire à l'axe de référence. Là encore, ce mouvement se fait par mouvement motorisé du bras de robot, successivement aux étapes ayant permis la fixation de l'outil au bras de robot. En effet, le mouvement motorisé du bras du robot entraîne ainsi directement l'outil dans son mouvement auquel il est fixé, celui-ci étant alors déplacé de son support qui lui est maintenu fixe par rapport à un bâti.

Selon un mode de réalisation, la pièce de verrouillage comprend un anneau.

Selon un mode de réalisation, le support présente la forme d'une fourchette munie de deux doigts de retenue. Cela permet en effet une meilleure répartition des efforts entre le support et l'outil.

Selon un mode de réalisation, les tenons sont tous solidaires d'un même sous-ensemble parmi le bras de robot et l'outil.

Selon un mode de réalisation, les tenons sont équirépartis. Une telle caractéristique permet d'obtenir un outil qui n'est pas indexé.

Alternativement, et selon un mode de réalisation, les tenons ne sont pas équirépartis. Dans une telle configuration, cela permet d'indexer l'outil en position angulaire.

Selon un autre aspect de l'invention, celle-ci a trait à un assemblage d'un outil sur un bras de robot caractérisé en ce que le bras de robot et l'outil sont mobiles entre :
- une position relative d'approche et une position relative d'encastrement par mouvement relatif de translation entre l'outil et le bras de robot parallèlement à un axe de référence du bras de robot de manière à ce que, dans la position relative d'encastrement, l'axe de référence du bras de robot est coaxial avec un axe de référence de l'outil, et des tenons pénètrent dans des encoches associées, chacune des encoches étant associés à un sous-ensemble parmi l'outil et le bras de robot et à un des tenons solidaire de l'autre sous-ensemble parmi l'outil et le bras de robot,
- la position relative d'encastrement et une position relative d'assemblage par mouvement relatif de rotation entre l'outil et le bras de robot autour de l'axe de rotation de façon à ce que dans la position relative d'assemblage, chacun des tenons est logé dans un prolongement circonférentiel de l'encoche associée par rapport à la position relative d'encastrement et s'y trouve retenu axialement,
l'assemblage comportant en outre au moins une pièce de verrouillage configurée pour assurer un verrouillage en position relative d'assemblage par mouvement relatif de translation parallèlement à l'axe de référence du bras de robot, entre l'ensemble formé par l'outil et le bras de robot dans la position relative d'assemblage et la pièce de verrouillage de façon à ce que, dans une position de verrouillage, des cales solidaires de la pièce de verrouillage pénètrent dans les encoches et verrouillent en position les tenons.

Selon un mode de réalisation, une partie au moins des tenons et/ou des encoches présente une paroi inclinée présentant au moins une composante axiale de sorte à permettre un ajustement des tenons logés dans un prolongement circonférentiel de l'encoche associée lors du passage de la position relative d'encastrement à la position relative d'assemblage.

Selon un mode de réalisation, les tenons sont tous solidaires d'un même sous-ensemble parmi le bras de robot et l'outil, de préférence du bras de robot, et les encoches sont toutes solidaires d'un même autre sous sous-ensemble parmi le bras de robot et l'outil, de préférence de l'outil.

Selon un mode de réalisation, la pièce de verrouillage est montée solidaire en liaison glissière d'un des sous-ensembles parmi le bras de robot et l'outil, de préférence du sous-ensemble duquel les tenons sont solidaires.

Selon un mode de réalisation, la pièce de verrouillage comprend un anneau, les cales étant de préférence saillantes radialement par rapport à un axe de référence de la pièce de verrouillage.

Selon un mode de réalisation, l'assemblage comprend au moins un moyen de blocage élastique axial de la pièce de verrouillage en position de verrouillage configuré de sorte qu'un déblocage de la pièce de verrouillage depuis la position de verrouillage se produit si un effort axial supérieur à un effort axial seuil prédéterminé est appliqué relativement entre l'ensemble formé par l'outil et le bras de robot dans la position relative d'assemblage et la pièce de verrouillage. De cette manière, la pièce de verrouillage est maintenue en position de verrouillage jusqu'à ce qu'un effort prédéterminé lui soit appliqué relativement à l'ensemble formé par l'outil et le bras de robot dans la position relative d'assemblage.

Selon un mode de réalisation, le moyen de blocage élastique axial de la pièce de verrouillage en position de verrouillage comprend au moins une bille contrainte élastiquement par un ressort.

### BRÈVE DESCRIPTION DES FIGURES

D'autres caractéristiques et avantages de l'invention ressortiront à la lecture de la description qui suit, en référence aux figures annexées, qui illustrent :
- figure 1 : une vue d'un cobot muni d'un bras de robot selon un mode de réalisation de l'invention ;
- figure 2 : une vue d'une portion d'extrémité d'un bras de robot et d'un assemblage selon un mode de réalisation, dans une position dans laquelle un outil est retenu dans un support ;
- figure 3 : une vue de la portion d'extrémité du bras de robot et de l'assemblage selon le mode de réalisation de la figure 2, dans une position dans laquelle l'outil est libéré du support ;
- figure 4 : une vue en perspective isométrique d'une position relative d'approche entre l'outil et le bras de robot ;
- figure 5 : une vue de face de la figure 4 ;
- figure 6 : une vue en perspective isométrique d'une position relative d'encastrement entre l'outil et le bras de robot ;
- figure 7 : une vue de face de la figure 6 ;
- figure 8 : une vue en perspective isométrique d'une position relative d'assemblage entre l'outil et le bras de robot ;
- figure 9 : une vue de face de la figure 8 ;
- figure 10 : une vue en perspective isométrique d'une position de verrouillage des tenons dans des encoches ;
- figure 11 : une vue de face de la figure 10 ;
- figure 12 : une vue en coupe axiale de la figure 10 ;
- figure 13 : une vue éclatée de l'assemblage selon ce mode de réalisation ;

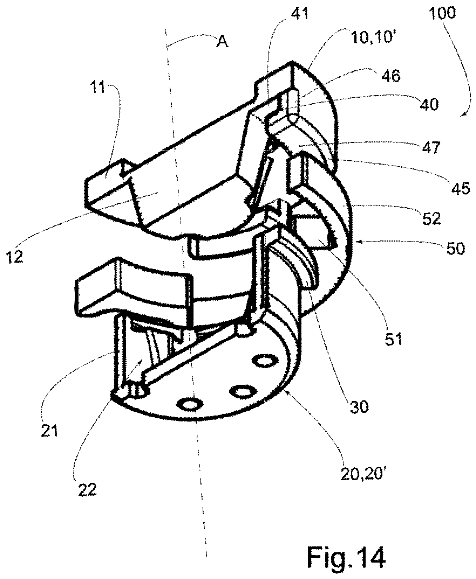

- figure 14 : une vue en coupe axiale de la figure 13.

Pour plus de clarté, les éléments identiques ou similaires sont repérés par des signes de référence identiques sur l'ensemble des figures.

### DESCRIPTION DÉTAILLÉE D'UN MODE DE RÉALISATION

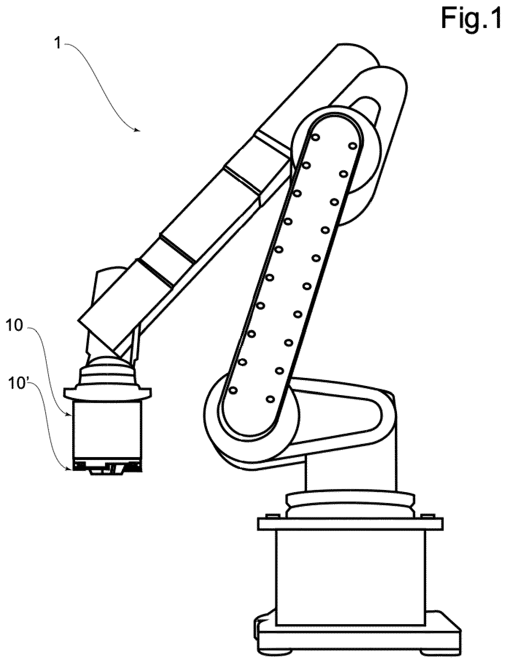

La figure 1 illustre une vue d'un robot **1,** en particulier ici d'un cobot muni d'un bras **10** de robot **1.** En d'autres, termes, il s'agit dans ce mode de réalisation d'un robot dit « collaboratif », c'est-à-dire travaillant dans un espace partagé et configuré pour être en interaction avec une personne. Le cobot est généralement dépendant des mouvements de l'opérateur. Dans le cadre d'une application à une chaîne de production automatisée par exemple, plusieurs cobots sont susceptibles d'intervenir conjointement avec des opérateurs humains, ou à proximité immédiate desdits opérateurs.

Le robot **1** présente, à une extrémité distale de son bras **10** articulé, une interface **10'** configurée pour assurer la fixation d'un outil **20.** Ses caractéristiques, notamment dimensionnelles, pourront varier en fonction de la forme et des dimensions des outils **20** à saisir.

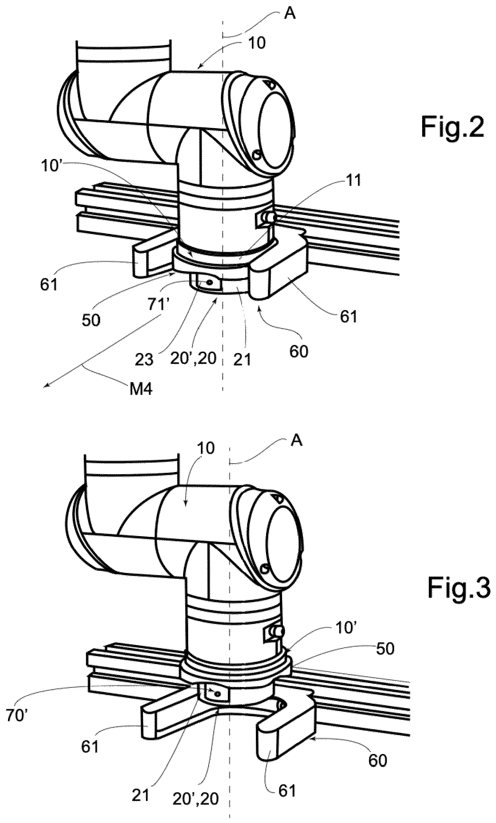

Les outils **20** sont disposés dans une zone ou un espace de travail du robot **1** ou cobot. En particulier, pour limiter le nombre d'outils **20** portés par le bras **10** de robot **1,** plusieurs outils **20** destinés à être utilisés alternativement par le bras **10** de robot **1** sont stockés chacun sur un support **60** monté fixe par rapport à un bâti (voir par exemple les figures 2 et 3). De cette manière, le bras **10** de robot **1** porte un unique outil **20** dédié à une tâche particulière et change d'outil **20** avant de procéder à une autre tâche différente. L'alternance des outils **20** dépend donc de l'alternance des tâches à effectuer.

L'outil **20** comporte une interface **20'** configurée pour coopérer avec l'interface **10'** du bras **10** de robot **1.** Chacune des interfaces **10'** et **20'** du bras **10** de robot **1** et de l'outil **20,** respectivement, peuvent être d'un seul tenant avec eux ou bien aussi présenter la forme d'une pièce rapportée spécifiquement sur ledit bras **10** de robot **1** et/ou de l'outil **20.** En référence aux figures ici décrites, on parlera indifféremment des interfaces **10'** et **20'** ou bien du bras **10** de robot **1** et de l'outil **20.**

L'outil **20** et le bras **10** de robot **1,** ou a minima leurs interfaces **10'** et **20'** d'assemblage associées, sont ainsi configurés pour former ensemble un assemblage **100** adapté à pouvoir être assemblé et désassemblé de façon aisée, rapide tout en présentant une structure simple, ceci en suivant une séquence de mouvements adaptés.

En particulier, l'assemblage comporte une pluralité de tenons **30** configurés pour coopérer avec des encoches **40** associées. Chacun des tenons **30** est solidaire de l'un des sous-ensembles parmi l'outil **20** et le bras **10** de robot **1** tandis que les encoches sont portées par l'autre des sous-ensembles parmi l'outil **20** et le bras **10** de robot **1.** De cette manière, la coopération de chacun des tenons **30** avec une encoche **40** associée permet l'assemblage des deux interfaces des deux interfaces **10'** et **20'** l'une avec l'autre, et donc l'assemblage de l'outil **20** sur le bras **10** de robot **1.**

La coopération des tenons **30** avec les encoches **40** associées permet d'assurer au moins un blocage axial de l'assemblage **100,** le blocage en rotation étant assuré par une pièce de verrouillage **50.**

En particulier, l'interface **20'** de l'outil **20** comprend un corps **21** présentant une forme globalement cylindrique d'axe de référence **A2.** L'interface **20'** de l'outil **20** comprend en outre une pluralité de tenons **30,** quatre dans ce mode de réalisations, répartis circonférentiellement autour du corps **21** cylindrique de l'interface **20'.** En particulier, les tenons **30** sont ici équirépartis, c'est-à-dire répartis de façon homogène autour de la circonférence du corps **21** globalement cylindrique.

Les tenons **30** sont formés par des saillies radiales par rapport à d'axe de référence **A2** s'étendant vers l'extérieur, dans le sens d'un éloignement de l'axe de référence **A2,** depuis le corps **21** de l'interface **20'.** Ces saillies s'étendent circonférentiellement sur un secteur angulaire prédéterminé, ici de 45 degrés. Chaque saillie est espacée circonférentiellement d'une autre saillie adjacente par un espace s'étendant sur un secteur angulaire également de 45 degrés.

Dans une telle configuration, les tenons **30** sont tous solidaires du même sous-ensemble parmi le bras **10** de robot **1** et l'outil **20,** à savoir ici de l'outil **20,** et en particulier ici de l'interface **20'** de l'outil **20.**

L'interface **10'** du bras **10** de robot **1** comprend quant à lui un corps présentant des encoches **40,** ici au nombre de quatre. L'assemblage comporte autant de tenons **30** que d'encoches **40,** chaque tenon **30** étant associé à une encoche **40.** L'interface **10'** du bras **10** de robot **1** comporte une base **11** globalement cylindrique d'axe de référence **A1,** elle-même située dans le prolongement du bras **10** de robot **1** du bras **10** de robot **1** qui porte ladite interface **10'.**

Chaque encoche **40** présente une forme en « L » : une première partie **401** de l'encoche **40** s'étend parallèlement à l'axe de référence **A1** du bras **10** de robot **1,** et une seconde partie **402** de l'encoche **40** s'étendant circonférentiellement par rapport à l'axe de référence **A1** du bras **10** de robot **1** depuis la première partie.

Dans une telle configuration, les encoches **40** sont toutes solidaires du même sous-ensemble parmi le bras **10** de robot 1 et l'outil **20,** différent ici de celui portant les tenons **30,** à savoir du bras **10** de robot **1,** et en particulier de l'interface **10'** du bras **10** de robot **1.**

Les encoches **40** sont délimitées par des crochets **45** s'étendant circonférentiellement sur un secteur angulaire prédéterminé, ici sensiblement de 45 degrés ou légèrement inférieur. Chaque crochet **45** est espacé circonférentiellement d'un autre crochet **45** adjacent par un espace circonférentiel ou interstice s'étendant sur un secteur angulaire également de sensiblement 45 degrés, ou légèrement supérieur.

Chaque crochet **45** comprend une embase **46** s'étendant axialement par rapport à l'axe de référence **A1** depuis la base **11** de l'interface **10'** du bras **10** de robot **1.** Chaque crochet **45** comprend également une tête **47** s'étendant radialement depuis l'embase **46** associée vers l'intérieur, c'est-à-dire dans le sens d'un rapprochement de l'axe de référence **A1,** depuis l'embase **46** associée de l'interface **10'.**

Les premières parties **401** axiales des encoches **40,** qui s'étendant parallèlement à l'axe de référence **A1** du bras **10** de robot **1,** sont délimitées circonférentiellement par les crochets **45** eux-mêmes. De cette manière, les espaces circonférentiels entre chacun des crochets délimitent circonférentiellement les premières parties **401** axiales des encoches **40.**

Les secondes parties **402** circonférentielles des encoches **40,** qui s'étendent circonférentiellement par rapport à l'axe de référence **A1** du bras **10** de robot **1** depuis la première partie **401** associée, sont délimitées par les crochets **45.** La distance axiale prise entre la base **11** de l'interface **10'** du bras **10** de robot **1** et la tête **47** de chaque crochet **45** est au moins égale, voire légèrement supérieure à une épaisseur du tenon **30** associé de sorte que chaque crochet **45** délimite, avec la base **11** de l'interface **10',** la seconde partie **402** circonférentielle de l'une des encoches **40.**

L'assemblage de l'outil **20** et du bras **10** de robot **1** sera mieux compris avec la description qui suit du procédé de fixation de l'outil **20** sur le bras **10** de robot **1.**

Dans une première étape du procédé de fixation de l'outil **20** sur le bras **10** de robot **1,** il est procédé au passage d'une position relative d'approche à une position relative d'encastrement par mouvement relatif de translation **M1** entre l'outil **20** et le bras **10** de robot **1** parallèlement à l'axe de référence **A1** du bras **10** de robot **1** de manière à ce que l'axe de référence **A1** du bras **10** de robot **1** soit coaxial avec l'axe de référence **A2** de l'outil **20,** et de manière à faire pénétrer des tenons **30** dans les encoches **40** associées. Comme décrit précédemment, chacune des encoches **40** est associée ; d'une part, à un sous-ensemble parmi l'outil **20** et le bras **10** de robot **1,** à savoir ici du bras **10** de robot **1** et, d'autre part, à un des tenons **30** solidaire de l'autre sous-ensemble parmi l'outil **20** et le bras **10** de robot **1,** à savoir ici de l'outil **20.**

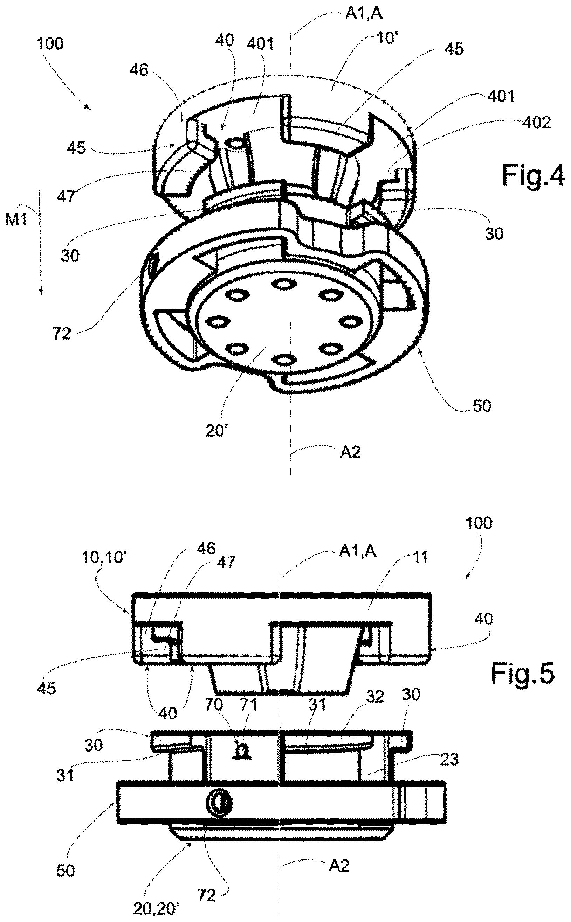

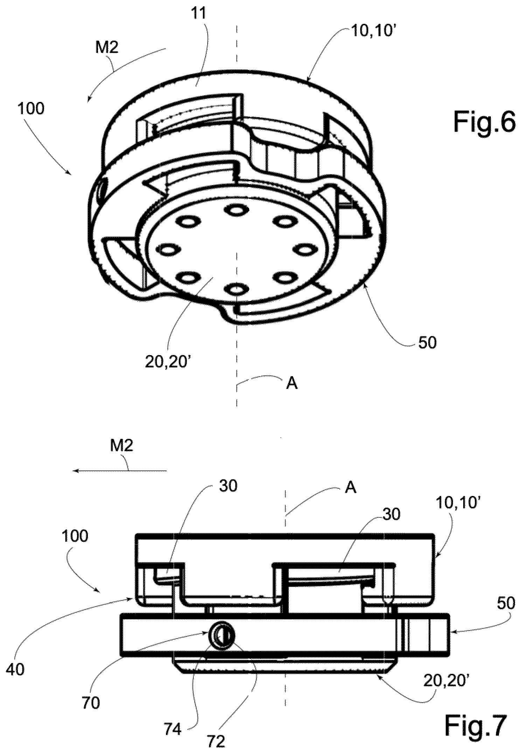

La position relative d'approche entre l'outil **20** et le bras **10** de robot **1** et plus précisément illustrée sur les figures 4 et 5. La position relative d'encastrement entre l'outil **20** et le bras **10** de robot **1** est quant à elle illustrée en détail sur les figures 6 et 7.

Dans ces positions, les axes de référence **A1** et **A2** sont coaxiaux et correspondent à un axe de référence **A** de l'assemblage **100.**

Durant le mouvement relatif de translation **M1** entre l'outil **20** et le bras **10** de robot **1** les tenons **30** pénètrent dans les encoches **40** associées, c'est-à-dire en particulier que chaque tenon **30** vient translater dans l'une des premières parties **401** axiales des encoches **40.**

Durant cette première étape, le passage de la position relative d'approche à la position relative d'encastrement se fait par mouvement motorisé du bras **10** de robot **1,** l'outil **20** étant retenu dans le support **60.** De cette manière, la commande du seul mouvement du bras **10** de robot **1** permet de mettre en œuvre cette étape. Le robot commande ainsi le déplacement dans l'espace de son interface **10'** par une combinaison de mouvements de translation(s) et/ou de rotation(s).

Dans une deuxième étape, successivement à la première étape, il est procédé au passage de la position relative d'encastrement à une position relative d'assemblage par mouvement relatif de rotation **M2** entre l'outil **20** et le bras **10** de robot **1** autour de l'axe de rotation de façon à ce que chacun des tenons **30** vienne se loger dans un prolongement circonférentiel **41** de l'encoche **40** associée et s'y trouve retenu axialement. Chaque prolongement circonférentiel est ici constitué par la seconde partie **402** de l'une des encoches **40.**

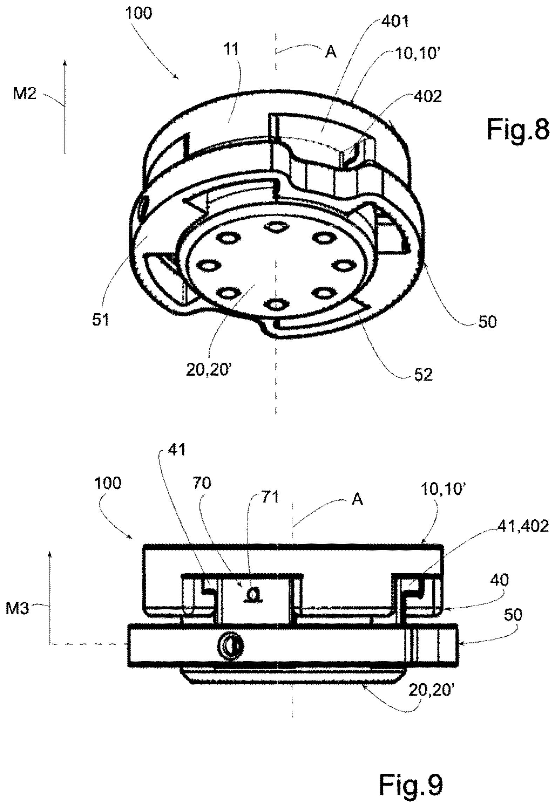

La position relative d'assemblage entre l'outil **20** et le bras **10** de robot **1** est illustrée en détail sur les figures 8 et 9.

Durant cette étape, le passage de la position relative d'encastrement à la position relative d'assemblage se fait par mouvement motorisé du bras **10** de robot **1,** successivement et dans la continuité du mouvement de translation **M1** de la première étape, l'outil **20** étant toujours retenu dans le support **60.** De cette manière, la commande du seul mouvement du bras **10** de robot **1** permet de mettre en œuvre cette étape. Le robot commande ainsi le déplacement de son interface **10'** par une rotation autour de son axe de référence **A1,** coaxial ici avec l'axe de référence **A** de l'assemblage **100.** L'outil **20** étant maintenu fixe dans son support **60,** le mouvement de l'interface **10'** est donc une rotation de l'interface **10'** relativement par rapport à outil **20.**

Durant ce mouvement relatif de rotation **M2** entre l'outil **20** et le bras **10** de robot **1,** lors du passage de la position relative d'encastrement à la position relative d'assemblage, l'assemblage **100** est configuré de sorte que chacun des tenons **30** vient se loger de façon ajustée dans un prolongement circonférentiel **41** de l'encoche **40** associée. Pour cela, au moins un des tenons **30,** de préférence tous les tenons **30,** comme illustré sur les figures, présentent une épaisseur, prise axialement, évolutive dans le sens d'un accroissement, d'une extrémité distale vers une extrémité proximale, de sorte qu'au fur et à mesure que le mouvement relatif de rotation **M2** entre l'outil **20** et le bras **10** de robot **1** se déroule, chaque tenon **30** pénètre dans prolongement circonférentiel **41** de l'encoche **40** jusqu'à être enserré axialement dedans. En d'autres termes, se réduit dans le sens circonférentiel de rotation vers la position relative d'assemblage. Dans ce mode de réalisation, les tenons présentant chacun une paroi **31** d'extrémité axiale opposée à la base **11** de l'interface **10'** du bras **10** de robot **1,** cette paroi **31** étant inclinée par rapport à l'axe de référence **A1.**

Alternativement ou en complément, le prolongement circonférentiel **41** de l'encoche **40** associée, en particulier ici la seconde partie **402** de chacune des encoches **40** présent une forme dont l'épaisseur radiale se réduit dans le sens circonférentiel de rotation vers la position relative d'assemblage.

La coopération des tenons **30** avec les encoches **40** associées permet d'assurer un blocage axial de l'assemblage **100,** entre l'outil **20** et le bras **10** de robot **1.** Les tenons **30** sont en effet bloqués, dans un sens par la tête **47** de chacun des crochets **45** délimitant en partie l'encoche **40** associée et dans l'autre sens par la base la base **11** de l'interface **10'** du bras **10** de robot **1** délimitant en partie l'encoche **40** associée. Bien entendu une telle configuration peut varier, la base **11** peut par exemple être remplacée par des saillies déportées axialement de chacune des têtes **47** des crochets **45** associés.

L'assemblage **100** comporte en outre au moins une pièce de verrouillage **50,** unique dans le mode de réalisation illustrée, et configurée pour assurer un verrouillage en position relative d'assemblage par mouvement relatif de translation **M3** parallèlement à l'axe de référence **A1** du bras **10** de robot **1.** Ce mouvement de translation **M3** est ici relatif entre, d'une part, l'ensemble formé par l'outil **20** et le bras **10** de robot **1** dans la position relative d'assemblage et, d'autre part, la pièce de verrouillage **50** de façon à ce que, dans une position de verrouillage, les cales **51** solidaires de la pièce de verrouillage **50** pénètrent dans les encoches **40** et verrouillent en position les tenons **30.**

Durant cette translation **M3,** les cales **51** pénètrent plus précisément dans la première partie **401** de l'encoche **40,** les tenons **30** étant alors logés dans la seconde partie **402** de l'encoche **40.** De préférence, chaque cale **51** s'étend circonférentiellement sur un secteur angulaire prédéterminé, ici sensiblement égale à celui de première partie **401** de l'encoche **40** associée, à savoir environ 45 degrés ou légèrement inférieur. Chaque cale **51** est espacée circonférentiellement d'une autre cale **51** adjacente par un espace s'étendant sur un secteur angulaire également de 45 degrés ou légèrement supérieur.

On assure ainsi durant cette troisième étape, un blocage en rotation grâce à la pièce de verrouillage **50,** de l'outil **20** par rapport au bras **10** de robot **1** dans la position relative d'assemblage, c'est-à-dire lorsque chacun des tenons **30** est logé dans le prolongement circonférentiel **41** de l'encoche **40** associée.

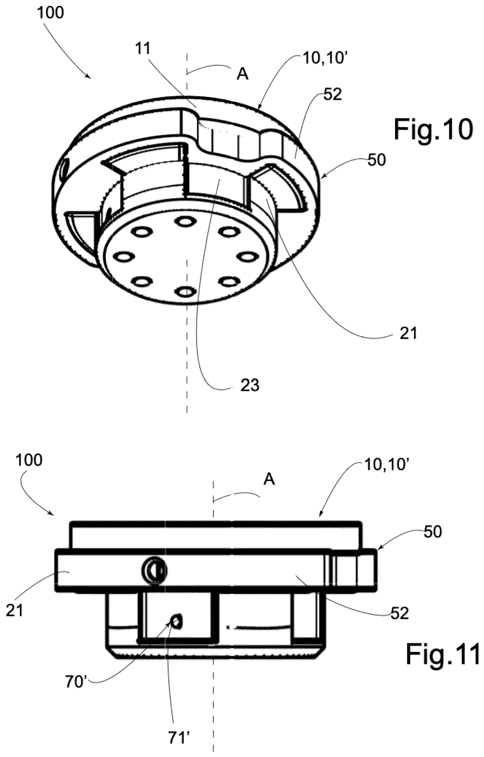

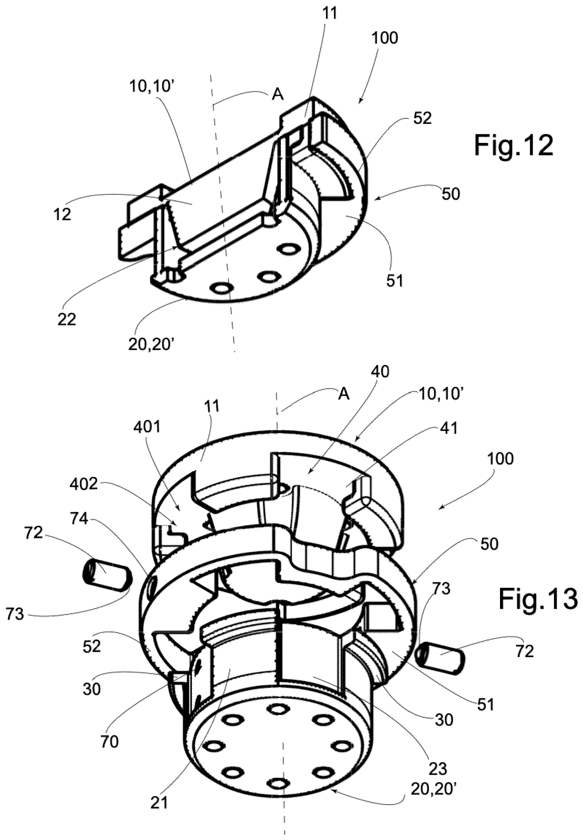

La position de verrouillage de l'outil **20** avec le bras **10** de robot **1** par la pièce de verrouillage **50** est illustrée en détail sur les figures 10, 11 et 12.

Durant cette étape, la pièce de verrouillage **50** est translatée suivant le mouvement translation **M3** parallèlement à l'axe de référence **A1** du bras **10** de robot **1.** Dans ce mode de réalisation, la pièce de verrouillage **50** est montée solidaire de l'outil, en particulier ici solidaire de l'interface **20'** de l'outil **20.** En particulier la pièce de verrouillage **50** est montée solidaire en liaison glissière par rapport à l'outil **20.**

La pièce de verrouillage **50** présente une forme délimitant un contour fermé entourant l'interface **20'** de l'outil **20** autour de son axe de référence **A2.** La pièce de verrouillage **50** comprend un anneau **52** définissant un socle annulaire, les cales **51** étant saillantes radialement par rapport à un axe de référence **A5** de la pièce de verrouillage **50,** coaxial à l'axe de référence **A2** de l'interface **20'** de l'outil **20.** La saillie radiale de chacune des cales **51** est dirigée depuis l'anneau **52** vers l'intérieur, c'est-à-dire dans un sens d'un rapprochement vers l'axe de référence **A2.**

Le verrouillage en position relative d'assemblage se fait également par mouvement motorisé du bras **10** de robot **1,** successivement et dans la continuité du mouvement de rotation **M2** de la deuxième étape, l'outil **20** étant toujours retenu dans le support **60.** De cette manière, la commande du seul mouvement du bras **10** de robot **1** permet de mettre en œuvre cette étape. Le robot commande ainsi le déplacement de son interface **10'** par une translation suivant son axe de référence **A1,** coaxial ici avec l'axe de référence **A** de l'assemblage **100.**

En particulier, l'outil **20** est maintenu fixe dans son support **60** au niveau de la pièce de verrouillage **50** elle-même. Le support **60** présente la forme d'une fourchette munie de deux doigts de retenue **61.** Chacun des doigts de retenue **61** présente une forme de rails ouverts placés en vis-à-vis dans lequel est monté en liaison glissière la pièce de verrouillage **50** suivant un axe radial à l'axe de référence **A2** de l'interface **20'** de l'outil **20.** La pièce de verrouillage **50** est portée par le support **60** et peut être mobile par rapport au support seulement suivant cet axe radial par rapport à l'axe de référence **A** de l'assemblage **100.**

Ainsi, dans une quatrième étape, il est procédé à une opération de libération de l'ensemble verrouillé constitué par le bras **10** de robot **1** et l'outil **20** en position d'assemblage, et la pièce de verrouillage **50** en position de verrouillage. Cette opération de libération est obtenue par translation du bras **10** de robot **1** par rapport au support **60** dans une direction **M4** perpendiculaire à l'axe de référence.

Cette direction **M4** correspond au degré de liberté de la liaison glissière entre la pièce de verrouillage **50** et les doigts de retenue **61** du support **60.** L'opération de libération de l'ensemble verrouillé depuis son support se fait également par mouvement motorisé du bras **10** de robot **1,** successivement et dans la continuité du mouvement de translation **M3** de la troisième étape, l'outil **20** étant alors déplacé en translation, entrainé par le bras **10** de robot **1,** et guidé dans le même temps par le support **60.** De cette manière, la commande du seul mouvement du bras **10** de robot **1** permet de mettre en œuvre cette étape. Le robot commande ainsi le déplacement de son interface **10'** par une translation suivant un axe radial à l'axe de référence **A1,** de l'interface **10'** du bras **10** de robot **1.**

La pièce de verrouillage **50** est mobile axialement le long du corps **21** entre deux positions : une position éloignée dans laquelle elle est éloignée des tenons **30** et une position de verrouillage dans laquelle est les cales **51** sont logées au moins en partie dans les encoches **40** et verrouillent en position les tenons **30.**

Chacune des cales **51** présente une extrémité distale opposée à une extrémité proximale solidaire de l'anneau **52,** les surfaces portées par les extrémités distales de chacune des cales **51** étant contenues dans une enveloppe virtuelle cylindrique de diamètre sensiblement égal voir légèrement inférieur à celui du corps **21** cylindrique de l'interface **20'** de l'outil **20.** Le fait d'être légèrement inférieur, permet aux cales **51** de pénétrer radialement légèrement dans des rainures **23** s'étendant parallèlement à l'axe de référence **A2** pour guider la translation de la pièce de verrouillage **50** par rapport au corps **21** de l'interface **20'** de l'outil **20.**

L'assemblage **100** comprend au moins un moyen de blocage élastique axial **70** de la pièce de verrouillage **50** en position de verrouillage configuré de sorte qu'un déblocage de la pièce de verrouillage **50** depuis la position de verrouillage se produit si un effort axial supérieur à un effort axial seuil prédéterminé est appliqué relativement entre l'ensemble formé par l'outil **20** et le bras **10** de robot **1** dans la position relative d'assemblage et la pièce de verrouillage **50.**

De même dans la position éloignée, au moins un moyen de blocage élastique axial **70'** de la pièce de verrouillage **50** en position éloignée axialement de la position de verrouillage est configuré de sorte qu'un déblocage de la pièce de verrouillage **50** depuis la position éloignée se produit si un effort axial supérieur à un effort axial seuil prédéterminé est appliqué relativement entre l'ensemble formé par l'outil **20** et le bras **10** de robot **1** dans la position relative d'assemblage et la pièce de verrouillage **50.**

Dans ce mode de réalisation, le moyen de blocage élastique axial **70, 70'** de la pièce de verrouillage **50** en position de verrouillage comprend au moins une bille **73,** contrainte élastiquement par un ressort. La bille **73** est logée dans un orifice dédié de la pièce de verrouillage **50** en formant une cage à l'intérieur de laquelle elle est montée libre en rotation et saillante radialement par rapport à une paroi radiale de la pièce de verrouillage **50,** ici une paroi intérieure délimitant radialement un contour intérieur de la pièce de verrouillage **50.** L'une des cales **51** au moins présente ainsi un tel un orifice à l'intérieur de laquelle la bille **73** est portée. Plus précisément, chaque cage logeant une bille **73** de la pièce de verrouillage **50** est portée par une vis **72** configurée pour se visser dans un trou taraudé **74** s'étendant radialement par rapport à l'axe de référence **A.** La bille **73** est située à une extrémité opposée de la vis **72** par rapport à une tête de la vis **72.** L'assemblage **100** est équipé ici de deux billes **73** montées diamétralement opposées l'une par rapport à l'autre. La surface portée par l'extrémité distale du corps **21** de l'interface **20'** de l'outil **20** correspondante présente des évidements **71, 71'** dans lequel la bille **73** peut coopérer au moins en partie.

Chaque bille **73** peut être contrainte élastiquement radialement à l'intérieur de la pièce de verrouillage **50** de sorte à venir en appui contre la surface portée par le corps **21** de l'interface **20'** de l'outil **20.** Lorsque pièce de verrouillage **50** translate, la bille 73 est déplacée axialement jusqu'à venir en regard d'un des évidements **71, 71'** puis la bille **73** est poussée élastiquement dans l'évidement associé porté par le corps **21** de l'interface **20'** de l'outil **20** lorsque celui-ci vient en regard de la bille **73.**

Le moyen de blocage élastique axial **70'** de la pièce de verrouillage **50** en position éloignée axialement de la position de verrouillage est mutualisé avec le moyen de blocage élastique axial **70** de la pièce de verrouillage **50** en position de verrouillage, ceux-ci étant distincts l'un de l'autre uniquement par leur évidement **71, 71'** la bille **73** et les moyens pour la retenir étant mutualisée.

Chaque bille **73** est associée ici à un évidement **71** pour le blocage position de verrouillage et un évidement **71'** en position éloignée axialement de la position de verrouillage en étant situés ensemble sur un même chemin s'étendant suivant un axe parallèle à l'axe de référence **A.**

Dans un autre mode de réalisation particulier non illustré, la bille **73** correspondante peut être portée par le corps **21** de l'interface **20'** de l'outil **20** et les évidements correspondants **71, 71'** peuvent être portées par la pièce de verrouillage **50.**

Alternativement ou en complément, les moyens de de blocage élastique axial **70, 70'** de la pièce de verrouillage **50** peuvent comprendre la coopération d'un pion déformable élastiquement dans un évidement. L'utilisation d'un tel matériau élastiquement déformable tel que du plastique permet de simplifier les moyens de blocage.

On notera que le procédé de fixation nécessite une coaxialité de l'axe de référence **A1** de l'interface **10'** du bras **10** de robot **1** avec l'axe de référence **A2** de l'interface **20'** l'outil **20.** Pour aider le bras **10** de robot **1** notamment durant le passage de la position relative d'encastrement à la position relative d'assemblage, le corps **21** de l'interface **20'** de l'outil **20** présente un espace intérieur creux **22** de forme globalement tronconique d'axe de référence **A2** à l'intérieur duquel peut venir coopérer axialement une partie male **12** globalement tronconique d'axe de référence **A1.** Les encoches **40** sont disposées de sorte à entourer la partie mâle **12,** les crochets 45 étant ouverts vers la partie mâle **12.** De cette manière, la partie male **12** vient coopérer progressivement durant le passage de la position relative d'encastrement à la position relative d'assemblage et permettre un autocentrage de la partie male **12** de l'interface **10'** du bras **10** de robot **1** dans l'espace intérieur creux **22** de l'interface **20'** de l'outil **20** au fur et à mesure de la progression du mouvement **M1** vers la position relative d'assemblage. Ces caractéristiques sont visibles en particulier sur les figures en coupe 12 et 14.

Le démontage de l'interface **20'** de l'outil **20** par rapport l'interface **10'** du bras **10** de robot **1** suit les mêmes étapes prises dans l'ordre inverse du procédé de fixation. En d'autres termes, le procédé de démontage de l'outil **20** du bras **10** de robot **1,** comportant :
- une opération de positionnement dans le support **60** de l'ensemble verrouillé constitué par le bras **10** de robot **1** et l'outil **20** en position d'assemblage, et la pièce de verrouillage **50** en position de verrouillage par translation du bras **10** de robot **1** par rapport au support **60** dans la direction **M4'** perpendiculaire à l'axe de référence, puis
- un déverrouillage en position relative d'assemblage par mouvement relatif de translation **M3'** parallèlement à l'axe de référence **A1** du bras **10** de robot **1,** entre l'ensemble formé par l'outil **20** et le bras **10** de robot **1** dans la position relative d'assemblage et au moins une pièce de verrouillage **50** de façon à ce que des cales **51** solidaires de la pièce de verrouillage **50** s'éloignent dans les encoches **40** au moins jusqu'à en être délogées et déverrouillent ainsi en position les tenons **30,** puis
- un passage de la position relative d'assemblage à une position relative d'encastrement par mouvement relatif de rotation **M2'** entre l'outil **20** et le bras **10** de robot **1** autour de l'axe de rotation de façon à ce que chacun des tenons **30** vienne se déloger du prolongement circonférentiel **41** de l'encoche **40** associée, puis
- un passage d'une position relative d'encastrement à une position relative d'éloignement par mouvement relatif de translation **M1'** entre l'outil **20** et le bras **10** de robot **1** parallèlement à un axe de référence **A1** du bras **10** de robot **1** de manière à extraire les tenons **30** des encoches **40** associées.

De la même manière que pour le procédé de fixation, chacune des étapes du procédé de démontage se fait par mouvement motorisé du bras **10** de robot **1.** l'outil **20** étant retenu dans un support **60** après l'opération de positionnement dans le support **60** de l'ensemble verrouillé.

La fixation de l'outil, comme son démontage de l'outil **20,** sont mis en œuvre par une simple succession d'étapes commandées directement par le robot **1** rendant les opérations autonomes, l'outil **20** suivant toujours la trajectoire réalisée par le robot **1.**

Grâce à une telle solution, on obtient une fixation entre une interface **20'** d'un outil **20** et une interface **10'** du bras **10** de robot **1** particulièrement simple à la fois dans sa structure et sa réalisation, que dans son usage et la mise en œuvre d'un procédé de fixation et de démontage associé. Par ailleurs, cette fixation est assurée par le simple mouvement commandé du bras **10** de robot **1** sans faire appel à une autre source d'énergie extérieure ou sans dépendre d'autres moyens comme des câbles. Sa réalisation est donc à la fois simple et rapide.

Par ailleurs, la prise de l'outil **20** par le bras **10** de robot **1** est particulièrement sûre et sécurisée grâce notamment au verrouillage de la position assemblée ou la position relative d'assemblage.

Chacune des interfaces **10', 20'** du bras **10** de robot **1** et de l'outil **20,** respectivement, peuvent être fabriquée par un procédé de fabrication additive, également appelé « impression 3D ». Pour cela, on choisira de préférence des interfaces **10', 20'** pouvant être rapportées sur leur ensemble associé, qu'il s'agisse du bras **10** de robot **1** ou de l'outil **20,** et fabriqués chacune d'un seul tenant.

Naturellement, l'invention est décrite dans ce qui précède à titre d'exemple. Il est entendu que l'homme du métier est à même de réaliser différentes variantes de réalisation de l'invention dans le cadre des revendications.

Par exemple, les tenons **30** et les encoches **40** peuvent être sur l'une ou l'autre des interfaces **10', 20'.** On peut également configurer l'assemblage 100 de sorte que chacune des interfaces **10', 20'** comporte à la fois des tenons **30** des encoches **40.**

La forme des encoches peut également varier sans modifier sa fonction.

On peut aussi modifier l'assemblage de sorte que les orientations radiales des tenons **30** et des encoches **40** soient inversées. Par exemple, les encoches peuvent être ouvertes vers l'extérieur, c'est-à-dire dans le sens d'un éloignement de l'axe de référence **A** et les tenons saillants vers l'intérieur, c'est-à-dire dans le sens d'un rapprochement de l'axe de référence **A.**

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Procédé de fixation d'un outil (20) sur un bras (10) de robot (1), le procédé comportant au moins les étapes suivantes :
- un passage d'une position relative d'approche à une position relative d'encastrement par mouvement relatif de translation (M1) entre l'outil (20) et le bras (10) de robot (1) parallèlement à un axe de référence (A1) du bras (10) de robot (1) de manière à ce que l'axe de référence (A1) du bras (10) de robot (1) soit coaxial avec un axe de référence (A2) de l'outil (20), et de manière à faire pénétrer des tenons (30) dans des encoches (40) associées, chacune des encoches (40) étant associés à un sous-ensemble parmi l'outil (20) et le bras (10) de robot (1) et à un des tenons (30) solidaire de l'autre sous-ensemble parmi l'outil (20) et le bras (10) de robot (1), puis
- un passage de la position relative d'encastrement à une position relative d'assemblage par mouvement relatif de rotation (M2) entre l'outil (20) et le bras (10) de robot (1) autour de l'axe de rotation de façon à ce que chacun des tenons (30) vienne se loger dans un prolongement circonférentiel (41) de l'encoche (40) associée et s'y trouve retenu axialement, puis
- un verrouillage en position relative d'assemblage par mouvement relatif de translation (M3) parallèlement à l'axe de référence (A1) du bras (10) de robot (1), entre l'ensemble formé par l'outil (20) et le bras (10) de robot (1) dans la position relative d'assemblage et au moins une pièce de verrouillage (50) le procédé étant **caractérisé en ce que** des cales (51) solidaires de la pièce de verrouillage (50) pénètrent dans les encoches (40) et verrouillent en position les tenons (30) en position de verrouillage.

2. Procédé de fixation selon la revendication 1, **caractérisé en ce que** durant le passage de la position relative d'encastrement à la position relative d'assemblage, chacun des tenons (30) vient se loger de façon ajustée dans un prolongement circonférentiel (41) de l'encoche (40) associée.

3. Procédé de fixation selon la revendication 1 ou 2, **caractérisé en ce que** le passage de la position relative d'approche à la position relative d'encastrement se fait par mouvement motorisé du bras (10) de robot (1), l'outil (20) étant retenu dans un support (60).

4. Procédé de fixation selon l'une quelconque des revendications précédentes, **caractérisé en ce que** le passage de la position relative d'encastrement à la position relative d'assemblage se fait par mouvement motorisé du bras (10) de robot (1), l'outil (20) étant retenu dans le support (60).

5. Procédé de fixation selon l'une quelconque des revendications précédentes, **caractérisé en ce que** le verrouillage en position relative d'assemblage se fait par mouvement motorisé du bras (10) de robot (1), la pièce de verrouillage (50) étant retenue dans le support (60).

6. Procédé de fixation selon la revendication précédente, **caractérisé en ce qu'**il comporte une opération de libération de l'ensemble verrouillé constitué par le bras (10) de robot (1) et l'outil (20) en position d'assemblage, et la pièce de verrouillage (50) en position de verrouillage par translation du bras (10) de robot (1) par rapport au support (60) dans une direction (M4) perpendiculaire à l'axe de référence.

7. Procédé de fixation selon l'une quelconque des revendications précédentes, **caractérisé en ce que** la pièce de verrouillage (50) comprend un anneau (52).

8. Procédé de fixation selon l'une quelconque des revendications précédentes, **caractérisé en ce que** le support (60) présente la forme d'une fourchette munie de deux doigts de retenue (61).

9. Procédé de fixation selon l'une quelconque des revendications précédentes, **caractérisé en ce que** les tenons (30) sont tous solidaires d'un même sous-ensemble parmi le bras (10) de robot (1) et l'outil (20).

10. Procédé de fixation selon l'une quelconque des revendications précédentes, **caractérisé en ce que** les tenons (30) sont équirépartis.

11. Procédé de fixation selon l'une quelconque des revendications 1 à 9, **caractérisé en ce que** les tenons (30) ne sont pas équirépartis.

12. Assemblage (100) d'un outil (20) sur un bras (10) de robot (1), le bras (10) de robot (1) et l'outil (20) étant mobiles entre :
- une position relative d'approche et une position relative d'encastrement par mouvement relatif de translation (M1) entre l'outil (20) et le bras (10) de robot (1) parallèlement à un axe de référence (A1) du bras (10) de robot (1) de manière à ce que, dans la position relative d'encastrement, l'axe de référence (A1) du bras (10) de robot (1) est coaxial avec un axe de référence (A2) de l'outil, et des tenons (30) pénètrent dans des encoches (30) associées, chacune des encoches (30) étant associés à un sous-ensemble parmi l'outil (20) et le bras (10) de robot (1) et à un des tenons (30) solidaire de l'autre sous-ensemble parmi l'outil (20) et le bras (10) de robot (1),
- la position relative d'encastrement et une position relative d'assemblage par mouvement relatif de rotation (M2) entre l'outil (20) et le bras (10) de robot (1) autour de l'axe de rotation de façon à ce que dans la position relative d'assemblage, chacun des tenons (30) est logé dans un prolongement circonférentiel (41) de l'encoche (40) associée par rapport à la position relative d'encastrement et s'y trouve retenu axialement,
l'assemblage (100) comportant en outre au moins une pièce de verrouillage (50) configurée pour assurer un verrouillage en position relative d'assemblage par mouvement relatif de translation (M3) parallèlement à l'axe de référence (A1) du bras (10) de robot (1), entre l'ensemble formé par l'outil (20) et le bras (10) de robot (1) dans la position relative d'assemblage et la pièce de verrouillage (50) **caractérisé en ce que**, dans une position de verrouillage, des cales (51) solidaires de la pièce de verrouillage (50) pénètrent dans les encoches (40) et verrouillent en position les tenons (30).

13. Assemblage (100) selon la revendication 12, **caractérisé en ce qu'**une partie au moins des tenons (30) et/ou des encoches (40) présente une paroi inclinée (31) présentant au moins une composante axiale de sorte à permettre un ajustement des tenons (30) logés dans un prolongement circonférentiel (41) de l'encoche (40) associée lors du passage de la position relative d'encastrement à la position relative d'assemblage.

14. Assemblage (100) selon la revendication 12 ou 13, **caractérisé en ce que** les tenons (30) sont tous solidaires d'un même sous-ensemble parmi le bras (10) de robot (1) et l'outil (20), de préférence du bras (10) de robot (1), et les encoches (40) sont toutes solidaires d'un même autre sous sous-ensemble parmi le bras (10) de robot (1) et l'outil (20), de préférence de l'outil (20).

15. Assemblage (100) selon les revendications 14, **caractérisé en ce que** la pièce de verrouillage (50) est montée solidaire en liaison glissière d'un des sous-ensembles parmi le bras (10) de robot (1) et l'outil (20), de préférence du sous-ensemble duquel les tenons (30) sont solidaires.

16. Assemblage (100) selon l'une quelconque des revendications 12 à 15, **caractérisé en ce que** la pièce de verrouillage (50) comprend un anneau (52), les cales (51) étant de préférence saillantes radialement par rapport à un axe de référence (A5) de la pièce de verrouillage (50).

17. Assemblage (100) selon l'une des revendications 12 à 16 dépendante au moins de la revendication 15, **caractérisé en ce qu'**il comprend au moins un moyen de blocage élastique axial (70) de la pièce de verrouillage (50) en position de verrouillage configuré de sorte qu'un déblocage de la pièce de verrouillage (50) depuis la position de verrouillage se produit si un effort axial supérieur à un effort axial seuil prédéterminé est appliqué relativement entre l'ensemble formé par l'outil (20) et le bras (10) de robot (1) dans la position relative d'assemblage et la pièce de verrouillage (50).

18. Assemblage (100) selon la revendication précédente, **caractérisé en ce que** le moyen de blocage élastique axial (70) de la pièce de verrouillage (50) en position de verrouillage comprend au moins une bille (71) contrainte élastiquement par un ressort.

## Patentansprüche

1. Verfahren zur Befestigung eines Werkzeugs (20) an einem Arm (10) eines Roboters (1), wobei das Verfahren mindestens die folgenden Schritte umfasst:
- einen Übergang von einer relativen Annäherungsposition zu einer relativen Einrastposition durch relative Translationsbewegung (M1) zwischen dem Werkzeug (20) und dem Arm (10) des Roboters (1) parallel zu einer Referenzachse (A1) des Arms (10) des Roboters (1), so dass die Referenzachse (A1) des Arms (10) des Roboters (1) koaxial mit einer Referenzachse (A2) des Werkzeugs (20) ist, und um Zapfen (30) in zugeordnete Kerben (40) eindringen zu lassen, wobei jede der Kerben (40) einer Unterbaugruppe aus dem Werkzeug (20) und dem Arm (10) des Roboters (1) und einem der Zapfen (30) zugeordnet ist, der mit der anderen Unterbaugruppe aus dem Werkzeug (20) und dem Arm (10) des Roboters (1) fest verbunden ist, anschließend
- einen Übergang von der relativen Einrastposition zu einer relativen Montageposition durch relative Drehbewegung (M2) zwischen dem Werkzeug (20) und dem Arm (10) des Roboters (1) um die Drehachse, so dass jeder der Zapfen (30) in einer Umfangsverlängerung (41) der zugeordneten Kerbe (40) aufgenomen wird und dort axial gehalten wird, anschließend
- eine Verriegelung in relativer Montageposition durch relative Translationsbewegung (M3) parallel zur Referenzachse (A1) des Arms (10) des Roboters (1), zwischen der von dem Werkzeug (20) und dem Arm (10) des Roboters (1) in der relativen Montageposition gebildeten Anordnung und mindestens einem Verriegelungsteil (50), wobei das Verfahren **dadurch gekennzeichnet ist, dass** die mit dem Verriegelungsteil (50) fest verbundenen Keile (51) in die Kerben (40) eindringen und die Zapfen (30) in Verriegelungsposition in Position verriegeln.

2. Befestigungsverfahren nach Anspruch 1, **dadurch gekennzeichnet, dass** während des Übergangs von der relativen Einrastposition zur relativen Montageposition jeder der Zapfen (30) passgenau in einer Umfangsverlängerung (41) der zugeordneten Kerbe (40) aufgenommen wird.

3. Befestigungsverfahren nach Anspruch 1 oder 2,
**dadurch gekennzeichnet, dass** der Übergang von der relativen Annäherungsposition zur relativen Einrastposition durch motorisierte Bewegung des Arms (10) des Roboters (1) erfolgt, wobei das Werkzeug (20) in einer Halterung (60) gehalten wird.

4. Befestigungsverfahren nach einem der vorstehenden Ansprüche, **dadurch gekennzeichnet, dass** der Übergang von der relativen Einrastposition zur relativen Montageposition durch motorisierte Bewegung des Arms (10) des Roboters (1) erfolgt, wobei das Werkzeug (20) in der Halterung (60) gehalten wird.

5. Befestigungsverfahren nach einem der vorstehenden Ansprüche, **dadurch gekennzeichnet, dass** die Verriegelung in relativer Montageposition durch motorisierte Bewegung des Arms (10) des Roboters (1) erfolgt, wobei das Verriegelungsteil (50) in der Halterung (60) gehalten wird.

6. Befestigungsverfahren nach dem vorstehenden Anspruch,
**dadurch gekennzeichnet, dass** es einen Vorgang zur Freigabe der verriegelten Anordnung umfasst, die durch den Arm (10) des Roboters (1) und das Werkzeug (20) in Montageposition sowie das Verriegelungsteil (50) in Verriegelungsposition durch Translation des Arms (10) des Roboters (1) in Bezug auf die Halterung (60) in einer Richtung (M4) senkrecht zur Referenzachse gebildet wird.

7. Befestigungsverfahren nach einem der vorstehenden Ansprüche, **dadurch gekennzeichnet, dass** das Verriegelungsteil (50) einen Ring (52) umfasst.

8. Befestigungsverfahren nach einem der vorstehenden Ansprüche, **dadurch gekennzeichnet, dass** die Halterung (60) die Form einer Gabel, die mit zwei Haltefingern (61) versehen ist, aufweist.

9. Befestigungsverfahren nach einem der vorstehenden Ansprüche, **dadurch gekennzeichnet, dass** die Zapfen (30) alle mit derselben Unterbaugruppe aus dem Arm (10) des Roboters (1) und dem Werkzeug (20) fest verbunden sind.

10. Befestigungsverfahren nach einem der vorstehenden Ansprüche, **dadurch gekennzeichnet, dass** die Zapfen (30) gleichmäßig verteilt sind.

11. Befestigungsverfahren nach einem der Ansprüche 1 bis 9,
**dadurch gekennzeichnet, dass** die Zapfen (30) nicht gleichmäßig verteilt sind.

12. Baugruppe (100) eines Werkzeugs (20) an einem Arm (10) eines Roboters (1), wobei der Arm (10) des Roboters (1) und das Werkzeug (20) beweglich sind zwischen:
- einer relativen Annäherungsposition und einer relativen Einrastposition durch relative Translationsbewegung (M1) zwischen dem Werkzeug (20) und dem Arm (10) des Roboters (1) parallel zu einer Referenzachse (A1) des Arms (10) des Roboters (1), so dass in der relativen Einrastposition die Referenzachse (A1) des Arms (10) des Roboters (1) koaxial mit einer Referenzachse (A2) des Werkzeugs ist, und Zapfen (30) in zugeordnete Kerben (30) eindringen, wobei jede der Kerben (30) einer Unterbaugruppe aus dem Werkzeug (20) und dem Arm (10) des Roboters (1) und einem der Zapfen (30) zugeordnet ist, der mit der anderen Unterbaugruppe aus dem Werkzeug (20) und dem Arm (10) des Roboters (1) fest verbunden ist,
- der relativen Einrastposition und einer relative Montageposition durch relative Drehbewegung (M2) zwischen dem Werkzeug (20) und dem Arm (10) des Roboters (1) um die Drehachse, so dass in der relativen Montageposition jeder der Zapfen (30) in einer Umfangsverlängerung (41) der zugeordneten Kerbe (40) in Bezug auf die relative Einrastposition aufgenommen wird und dort axial gehalten wird,
wobei die Baugruppe (100) mit mindestens ferner einem Verriegelungsteil (50) konfiguriert ist, um eine Verriegelung in relativer Montageposition durch relative Translationsbewegung (M3) parallel zur Referenzachse (A1) des Arms (10) des Roboters (1) zwischen der von dem Werkzeug (20) und dem Arm (10) des Roboters (1) in der relativen Montageposition gebildeten Anordnung und dem Verriegelungsteil (50) zu gewährleisten, **dadurch gekennzeichnet, dass** in einer Verriegelungsposition Keile (51), die mit dem Verriegelungsteil (50) fest verbunden sind, in die Kerben (40) eindringen und die Zapfen (30) in Position verriegeln.

13. Baugruppe (100) nach Anspruch 12, **dadurch gekennzeichnet, dass** mindestens ein Teil der Zapfen (30) und/oder der Kerben (40) eine geneigte Wand (31) aufweist, die mindestens eine axiale Komponente aufweist, so dass eine Anpassung der Zapfen (30) ermöglicht wird, die in einer Umfangsverlängerung (41) der zugeordneten Kerbe (40) beim Übergang von der relativen Einrastposition zur relativen Montageposition untergebracht sind.

14. Baugruppe (100) nach Anspruch 12 oder 13,
**dadurch gekennzeichnet, dass** die Zapfen (30) alle mit einer gleichen Unterbaugruppe aus dem Arm (10) des Roboters (1) und dem Werkzeug (20) fest verbunden sind, vorzugsweise mit dem Arm (10) des Roboters (1), und die Kerben (40) alle mit einer gleichen anderen Unterbaugruppe aus dem Arm (10) des Roboters (1) und dem Werkzeug (20) fest verbunden sind, vorzugsweise mit dem Werkzeug (20).

15. Baugruppe (100) nach Anspruch 14, **dadurch gekennzeichnet, dass** das Verriegelungsteil (50) in Gleitverbindung mit einer der Unterbaugruppen aus dem Arm (10) des Roboters (1) und dem Werkzeug (20) fest montiert ist, vorzugsweise mit der Unterbaugruppe, mit der die Zapfen (30) fest verbunden sind.

16. Baugruppe (100) nach einem der Ansprüche 12 bis 15,
**dadurch gekennzeichnet, dass** das Verriegelungsteil (50) einen Ring (52) umfasst, wobei die Keile (51) vorzugsweise radial in Bezug auf eine Referenzachse (A5) des Verriegelungsteils (50) vorstehen.

17. Baugruppe (100) nach einem der Ansprüche 12 bis 16, abhängig mindestens von Anspruch 15, **dadurch gekennzeichnet, dass** sie mindestens ein axiales elastisches Blockiermittel (70) des Verriegelungsteils (50) in Verriegelungsposition umfasst, das so konfiguriert ist, dass eine Entriegelung des Verriegelungsteils (50) aus der Verriegelungsposition erfolgt, wenn eine axiale Kraft, die größer als eine vorbestimmte axiale Schwellenkraft ist, relativ zwischen der von dem Werkzeug (20) und dem Arm (10) des Roboters (1) in der relativen Montageposition gebildeten Anordnung und dem Verriegelungsteil (50) aufgebracht wird.

18. Baugruppe (100) nach dem vorstehenden Anspruch,
**dadurch gekennzeichnet, dass** das axiale elastische Blockiermittel (70) des Verriegelungsteils (50) in Verriegelungsposition mindestens eine Kugel (71) umfasst, die elastisch durch eine Feder beansprucht wird.

## Claims

1. A method for attaching a tool (20) to an arm (10) of a robot (1), the method comprising at least the following steps:
- transitioning from a relative approach position to a relative embedding position by relative translational movement (M1) between the tool (20) and the arm (10) of the robot (1) parallel to a reference axis (A1) of the arm (10) of the robot (1), so that the reference axis (A1) of the arm (10) of the robot (1) is coaxial with a reference axis (A2) of the tool (20), and so as to cause tenons (30) to penetrate associated notches (40), each of the notches (40) being associated with one subunit from the tool (20) and the arm (10) of the robot (1), and with one of the tenons (30) rigidly connected to the other subunit from the tool (20) and the arm (10) of the robot (1), then
- transitioning from the relative embedding position to a relative assembly position by relative rotational movement (M2) between the tool (20) and the arm (10) of the robot (1) about the axis of rotation, in such a way that each of the tenons (30) is housed in a circumferential extension (41) of the associated notch (40) and is axially retained therein, then
- locking in the relative assembly position by relative translational movement (M3) parallel to the reference axis (A1) of the arm (10) of the robot (1), between the unit formed by the tool (20) and the arm (10) of the robot (1) in the relative assembly position and at least one locking part (50), the method being **characterized in that** wedges (51) rigidly connected to the locking part (50) penetrate the notches (40) and lock the tenons (30) in position in the locking position.

2. The attachment method according to claim 1, **characterized in that** during the transition from the relative embedding position to the relative assembly position, each of the tenons (30) is housed snugly in a circumferential extension (41) of the associated notch (40).

3. The attachment method according to claim 1 or 2, **characterized in that** the transition from the relative approach position to the relative embedding position is effected by motorized movement of the arm (10) of the robot (1), the tool (20) being retained in a support (60).

4. The attachment method according to any of the preceding claims, **characterized in that** the transition from the relative embedding position to the relative assembly position is effected by motorized movement of the arm (10) of the robot (1), the tool (20) being retained in the support (60).

5. The attachment method according to any of the preceding claims, **characterized in that** the locking in the relative assembly position is effected by motorized movement of the arm (10) of the robot (1), the locking part (50) being retained in the support (60).

6. The attachment method according to the preceding claim,
**characterized in that** it comprises an operation of releasing the locked unit constituted by the arm (10) of the robot (1) and the tool (20) in the assembly position, and the locking part (50) in the locking position by translation of the arm (10) of the robot (1) in relation to the support (60) in a direction (M4) perpendicular to the reference axis.

7. The attachment method according to any of the preceding claims, **characterized in that** the locking part (50) comprises a ring (52).

8. The attachment method according to any of the preceding claims, **characterized in that** the support (60) is in the form of a fork provided with two retaining fingers (61).

9. The attachment method according to any of the preceding claims, **characterized in that** the tenons (30) are all rigidly connected to the same subunit from the arm (10) of the robot (1) and the tool (20).

10. The attachment method according to any of the preceding claims, **characterized in that** the tenons (30) are equally distributed.

11. The attachment method according to any of claims 1 to 9,
**characterized in that** the tenons (30) are not equally distributed.

12. An assembly (100) of a tool (20) to an arm (10) of a robot (1), the arm (10) of the robot (1) and the tool (20) being movable between:
- a relative approach position and a relative embedding position by relative translational movement (M1) between the tool (20) and the arm (10) of the robot (1) parallel to a reference axis (A1) of the arm (10) of the robot (1) so that, in the relative embedding position, the reference axis (A1) of the arm (10) of the robot (1) is coaxial with a reference axis (A2) of the tool, and tenons (30) penetrate associated notches (30), each of the notches (30) being associated with a subunit from the tool (20) and the arm (10) of the robot (1) and with one of the tenons (30) rigidly connected to the other subunit from the tool (20) and the arm (10) of the robot (1),
- the relative embedding position and a relative assembly position by relative rotational movement (M2) between the tool (20) and the arm (10) of the robot (1) about the axis of rotation in such a way that, in the relative assembly position, each of the tenons (30) is housed in a circumferential extension (41) of the associated notch (40) in relation to the relative embedding position and is axially retained therein,
the assembly (100) further comprising at least one locking part (50) configured to ensure locking in the relative assembly position by relative translational movement (M3) parallel to the reference axis (A1) of the arm (10) of the robot (1), between the unit formed by the tool (20) and the arm (10) of the robot (1) in the relative assembly position and the locking part (50), **characterized in that,** in a locking position, wedges (51) rigidly connected to the locking part (50) penetrate the notches (40) and lock the tenons (30) in position.

13. The assembly (100) according to claim 12, **characterized in that** at least some of the tenons (30) and/or notches (40) have an inclined wall (31) having at least one axial component so as to allow adjustment of the tenons (30) housed in a circumferential extension (41) of the associated notch (40) during the transition from the relative embedding position to the relative assembly position.

14. The assembly (100) according to claim 12 or 13, **characterized in that** the tenons (30) are all rigidly connected to the same subunit from the arm (10) of the robot (1) and the tool (20), preferably to the arm (10) of the robot (1), and the notches (40) are all rigidly connected to the same other sub-subunit from the arm (10) of the robot (1) and the tool (20), preferably to the tool (20).

15. The assembly (100) according to claim 14, **characterized in that** the locking part (50) is rigidly mounted in a sliding connection with one of the subunits from the arm (10) of the robot (1) and the tool (20), preferably with the subunit to which the tenons (30) are rigidly connected.

16. The assembly (100) according to any of claims 12 to 15,
**characterized in that** the locking part (50) comprises a ring (52), the wedges (51) preferably projecting radially in relation to a reference axis (A5) of the locking part (50).

17. The assembly (100) according to any of claims 12 to 16, dependent at least on claim 15, **characterized in that** it comprises at least one axial elastic blocking means (70) of the locking part (50) in the locking position, configured so that an unblocking of the locking part (50) from the locking position occurs if an axial force greater than a predetermined threshold axial force is applied relatively between the unit formed by the tool (20) and the arm (10) of the robot (1) in the relative assembly position and the locking part (50).

18. The assembly (100) according to the preceding claim,
**characterized in that** the axial elastic blocking means (70) of the locking part (50) in the locking position comprises at least one ball (71) elastically stressed by a spring.
